# EUROPÄISCHE PATENTSCHRIFT

(11) **EP 1 135 341 B1**
(45) Veröffentlichungstag und Bekanntmachung des Hinweises auf die Patenterteilung: **28.04.2004**
(21) Anmeldenummer: 00958391.5
(22) Anmeldetag: 08.08.2000
(51) Int. Cl.: C03B 5/02, C03B 5/225, C03B 5/44, C03B 7/07

(54) **VORRICHTUNG ZUM ERSCHMELZEN ODER LÄUTERN VON GLÄSERN ODER GLASKERAMIKEN**
METHOD FOR MELTING OR REFINING GLASSES OR GLASS CERAMICS
DISPOSITIF PERMETTANT LA FUSION OU L'AFFINAGE DE VERRES OU DE VITROCERAMIQUES

(30) Priorität: 21.08.1999 DE 19939786
(43) Veröffentlichungstag der Anmeldung: 26.09.2001
(73) Patentinhaber: Schott Glas, 55122 Mainz (DE); CARL-ZEISS-STIFTUNG trading as SCHOTT GLAS, 55122 Mainz (DE)
(72) Erfinder: KOLBERG, Uwe, 55252 Mainz-Kastel (DE); RÖMER, Hildegard, 61184 Karben (DE); LENTES, Frank-Thomas, 55411 Bingen (DE); WEIDMANN, Günter, 55288 Armsheim (DE)
(74) Vertreter: Dr. Weitzel & Partner
(86) Internationale Anmeldenummer: PCT/EP2000/007653
(87) Internationale Veröffentlichungsnummer: WO 2001/014263

(56) Entgegenhaltungen:
- FR-A- 2 613 351
- FR-A- 2 768 257
- GB-A- 225 211
- US-A- 2 252 756
- PATENT ABSTRACTS OF JAPAN vol. 6, no. 180, 14. September 1982 (1982-09-14) -& JP 57 095834 A (NSG CO. LTD.), 14. Juni 1982 (1982-06-14) in der Anmeldung erwähnt

## Beschreibung

Die Erfindung betrifft eine Vorrichtung zum Läutern von Gläsern oder Glaskeramiken.

Solche Vorrichtungen sind in Gestalt sogenannter Skulltiegel bekanntgeworden. Sie umfassen eine Tiegelwandung. Diese ist im allgemeinen zylindrisch. Sie ist aus einem Kranz von vertikalen Metallrohren aufgebaut. Zwischen einander benachbarten Rohren verbleiben Schlitze. Auch der Tiegelboden kann aus Metallrohren aufgebaut sein. Er kann aber auch aus Feuerfestmaterial bestehen. An ihren Enden sind sie an vertikale Rohre zur Kühlmittelzufuhr beziehungsweise Kühlmittelabfuhr angeschlossen.

Die Beheizung erfolgt durch eine Induktionsspule, die die Tiegelwandung umgibt, und über welche Hochfrequenzenergie in den Tiegelinhalt einkoppelbar ist.

Ein solcher Skulltiegel ist aus DE 33 16 546 C1 bekanntgeworden.

Ein Skulltiegel arbeitet wie folgt: der Tiegel wird mit Gemenge oder Scherben oder einem Gemisch hieraus befüllt. Das Glas, beziehungsweise die Schmelze müssen zunächst vorgeheizt werden, um eine gewisse Mindestleitfähigkeit zu erreichen. Das Vorheizen geschieht häufig durch Brennerbeheizung. Ist die Kopplungstemperatur erreicht, so kann die weitere Energiezufuhr über die Einstrahlung von Hochfrequenzenergie erfolgen. Auch während des Betriebes wird die Schmelze zusätzlich zu dem Beheizen mittels Hochfrequenzenergie durch Brenner beheizt, die auf die Schmelze von oben her einwirken, oder durch heiße Abgase. Insbesondere bei der Verwendung eines Skulltiegels zum Läutern ist dies notwendig. Ist nämlich die Oberflächenschicht kalt und entsprechend höher viskos, so werden Blasen daran gehindert, aus der Schmelze auszutreten oder es kommt zu Schaumbildung.

In der Regel ist der Skulltiegel stehend angeordnet. Er wird im allgemeinen diskontinuierlich betrieben.

JP 57-95834 A beschreibt eine Vorrichtung mit einer Quarzrinne, die horizontal angeordnet ist.

Der Quarzrinne ist ein Hochfrequenz-Schwingkreis zugeordnet, der eine zylindrische Spule umfaßt. Die zylindrische Spule umschlingt die Quarzrinne. Die Quarzrinne wird zwar gekühlt. Sie hat jedoch keine hohe Langzeitstabilität und keine hohe Bruchfestigkeit. Außerdem ist ein spezielles Beheizen der Schmelzoberfläche nicht möglich. Es entsteht sogar eine gewisse Kühlung, die zur Bildung einer zähen Haut im Oberflächenbereich führen kann. Soll eine solche Rinne als Läutervorrichtung verwendet werden, so können Blasen nicht mehr ungehindert aufsteigen und aus der Schmelze auftreten. Die Rinne ist somit zum Läutern nicht brauchbar. Wird die Rinne zum Schmelzen eingesetzt, und enthält die Schmelze leicht flüchtige Komponenten, so besteht die Gefahr der Kondensation am gekühlten Oberbau der Rinne. Das Kondensat kann dabei in unkontrollierter Weise in die Schmelze abtropfen. Dies kann zu Glasfehlern in Form von Knoten, Blasen oder Schlieren führen. Kommt es zu Korrosion des Spulenmateriales, so führt dies je nach Material der Spule auch zu Verfärbungen des Glases. Dies ist insbesondere bei optischen Gläsern nicht akzeptabel.

Weiterhin gibt es sehr viele optische Gläser, die einen hohen Anteil an Fluor, Phosphat oder anderen hochaggressiven Bestandteilen aufweisen. Auch diese können das Material der Spule angreifen. Die Korrosion kann derart stark sein, daß es zum Austritt von Kühlwasser kommt, so daß die Betriebssicherheit der Anlage nicht mehr gewährleistet ist.

Normalerweise erfolgt die Läuterung von Gläsern für optische Anwendungen in sogenannten horizontalen Läuterrinnen, die mit Edelmetall ausgekleidet sind. Der Wärmeeintrag geschieht durch direkte oder indirekte Erwärmung der Gefäßwand. Dadurch ist die höchste Temperatur an der Grenzfläche Glasschmelze - Gefäßmaterial. Eine hohe Korrosion und eine damit verbundene spektrale Extinktionserhöhung ist unvermeidlich.

Der Erfindung liegt die Aufgabe zugrunde, eine Vorrichtung zu schaffen, bei der die Vorzüge der Technik der induktiven Erwärmung genutzt werden, die betriebssicher ist, die sich auch zum Läutern von Schmelzen eignet, und die zu Gläsern einwandfreier Qualität führt.

Diese Aufgabe wird durch die Merkmale von Anspruch 1 gelöst.

Gemäß der Erfindung wird somit nicht nur von der Hochfrequenztechnik sondern auch von der Skull-Technik Gebrauch gemacht. Es wird eine Rinne verwendet, die einen Aufbau nach Art eines Skulltiegels hat.

Erfindungsgemäß erfolgt der Leistungseintrag mittels Hochfrequenz direkt in die Glasschmelze. Zusätzlich werden die Gefäßwand und die Glasschmelze in der Nähe der Gefäßwand so stark gekühlt, daß der korrosive Angriff der Glasschmelze extrem unterdrückt wird. Eine etwaige Entglasung in der Nähe der Gefäßwand unterstützt die korrosionsschützende Wirkung der Kühlung, weil sie auf Grund der nochmals gesteigerten Viskosität die Konvektion verringert und damit den Stoffaustausch zwischen Schmelze und Wand reduziert.

Bedingt durch die starke Kühlung an der Gefäßwand und dem damit verbundenen hohen Temperaturgradienten erhält man im Inneren der so geschaffenen horizontalen Läuterrinne eine starke durch natürliche Konvektion erzeugte Strömung, wobei sich der Quellpunkt in etwa in der Mitte der Rinne in der Nähe der Glasbadoberfläche befindet. Damit verbunden ist eine erheblich verbesserte Durchmischung der Glasschmelze, die zu einer wesentlich verbesserten Läuterwirkung (Blasenentfemung) und zu einer verbesserten Homogenisierung der Glasschmelze führt.

In allen Fällen bestehen die horizontalen Läuterrinnen aus keramischen oder metallischen Rohren, die am Rand stark gekühlt werden. Die zur Beheizung notwendige Energie wird direkt in das Schmelzgut mittels HochfrequenzStrahlung im Frequenzbereich zwischen 100 kHz und 10 MHz eingetragen.

Die Erfindung bringt jedoch den weiteren folgenden Vorteil, den die Erfinder erkannt haben:
Verlaufen die wassergekühlten Metallrohre einer Skull-Vorrichtung in Glasflußrichtung, so kann es bei hohen Schmelztemperaturen, wenn die erstarrte, kalte Glasisolationsschicht sehr dünn wird, zu Überschlägen zwischen der Glasschmelze und den Metallrohren der Skull-Rinne kommen. Dies kann zu Lichtbögen zwischen der Skull-Rinne und der Schmelze führen, die eine Zerstörung des Skull-Gerippes zur Folge haben können. Dabei ist zu vermuten, daß die Lichtbogenbildung durch die in Skull-Rohre induzierte Hochfrequenzspannungen erzeugt wird.

Bei einer Ausbildung gemäß der Erfindung verlaufen die wassergekühlten, metallischen Skull-Rohre senkrecht zur Glasflußrichtung, somit nicht in Glasflußrichtung. Damit wird das Entstehen von Lichtbögen zwischen den Skull-Rohren und der Schmelze weitgehend vermieden.

In weiterer Ausgestaltung der Erfindung wird die Überschlagsneigung - d. h. die Neigung zum Bilden von Lichtbögen - dadurch vollends unterbunden, daß die Enden der U-Schenkel der Skull-Rohre zwecks Bildung einer Kurzschlußbrücke leitend miteinander verbunden werden.

Ein weiterer wichtiger Vorteil der Erfindung ist der in der Rinne auftretende Quellpunkt. Das Glas wird durch den HF-Energieeintrag und die damit verbundene Temperaturführung in der Mitte zu einer Strömung nach oben gezwungen. Dadurch gelangen die Läuterblasen an die Schmelzoberfläche. In klassischen Wannen wird im Bereich der Läuterung solch eine Aufwärtsströmung häufig durch einen Wall erzwungen, so daß die Glasströmung nach oben geführt wird. Diesen Wall kann man sich bei der HF-beheizten Rinne sparen. Hier gibt es eine "natürliche Strömung", die für den Effekt sorgt. Simulationsrechnungen haben sogar gezeigt, daß der Strömungsquellpunkt in der Skullrinne für die Läuterung sogar wesentlich effektiver ist als der klassisch eingesetzte Wall. Vorteilhaft neben der besseren Läuterung ist natürlich auch, daß es keinen Verschleiß eines Walls geben kann.

Die Erfindung bringt die folgenden weiteren Vorteile:
Sie eignet sich hervorragend für den kontinuierlichen Betrieb. Sie kann somit sehr wirtschaftlich arbeiten.

Ein weiterer Vorteil besteht in folgendem:
Aufgrund der Gestaltung und Anordnung der Induktionsspulen als liegende Spulen ist die Rinne oben offen. Der Spiegel der Schmelze liegt frei. Die Oberfläche der Schmelze ist somit frei zugänglich für die Installation einer Zusatzheizung, beispielsweise eines Gasbrenners oder einer elektrischen Heizeinrichtung. Diese Oberhitze ist besonders vorteilhaft für den Fall, daß die Rinne als Läuteraggregat eingesetzt wird. Hierbei sind demgemäß hohe Oberflächentemperaturen erreichbar, so daß das Aufplatzen von Blasen im Bereich der Oberfläche sichergestellt wird.

Die Oberhitze ist außerdem hilfreich für den Fall des Ausfalls der Hochfrequenzenergie. Hierbei kann nämlich zumindest der Glastransport sichergestellt werden. Außerdem kann die Schmelztemperatur auf einem solchen Wert gehalten werden, daß nach erneutem Ingangsetzen der Hochfrequenzheizung ein Wiederankoppeln möglich ist.

Ferner besteht keine Gefahr der Kondensation von Verdampfungsprodukten an den wassergekühlten Spulenrohren, da sich diese nicht oberhalb des Spiegels der Schmelze befinden.

Weiterhin läßt sich bei der erfindungsgemäßen Skull-Rinne ein komplexer Oberbau vorsehen, umfassend keramische Platten, die die Rinne abdecken.

Die keramischen Platten lassen sich mittels Brenner auf der Oberseite erhitzen. Die Platten strahlen sodann auf der Unterseite Wärme auf die Glasoberfläche, so daß das Glas indirekt beheizt wird. Dies hat den Vorteil, daß bei Gläsern mit stark zur Verdampfung neigenden Bestandteilen (B₂O₃, P₂O₅, F, S, Se, Te oder dergleichen) keine starken und turbulenten atmosphärischen Störungen unmittelbar unter dem Spiegel der Glasschmelze auftreten. Diese würden nämlich die leicht flüchtigen Komponenten mit sich fortreißen, was zu einer Veränderung der Glaszusammensetzung führen müßte. Auch wird hierdurch ein vorzeitiges Verstopfen von Filteranlagen vermieden.

Ein weiterer Vorteil der erfindungsgemäßen Skull-Rinne liegt darin, daß bei Zusatzbeheizung mittels Brenner - mit oder ohne keramischer Abdeckung - eine reduzierende Atmosphäre eingestellt werden kann. Diese ist zur Herstellung von Wärmeschutzgläsem oder hoch-UV-durchlässigen Gläsern notwendig, bei denen es darauf ankommt, daß das Fe³⁺/Fe²⁺-Verhältnis möglichst weitgehend zur reduzierten Form verschoben ist. Fe²⁺ absorbiert im IR, also die Wärmestrahlung (Wärmeschutzglas), während Fe³⁺ im UV absorbiert, also bei hoch-UV-durchlässigen Gläsern weitestgehend vermieden werden muß. Da es sich bei den Gläsern oft um Phosphat- bzw. Fluorphosphatgläser handelt, ist die Verwendung einer keramischen Abdeckplatte sinnvoll. Eine ähnliche Argumentation gilt bei der Produktion von Anlaufgläsern, bei denen es darauf ankommt, daß die für die Färbung notwendigen Chalkogenide zumindest teilweise in der reduzierten Form (S²⁻, Se²⁻, Te²⁻) vorliegen. Auch hier ist es vorteilhaft, die Verdampfung in diesem Fall der Farbkomponenten, durch Verwendung keramischer Abdeckplatten zu minimieren.

Reduzierende Bedingungen können auch bei Verwendung einer Elektrooberhitze mittels entsprechender reduzierender Gase oder Gasmischungen (Formiergas, H₂, CO/CO₂ und weiterer) eingestellt werden, jedoch ist die Verwendung eines reduzierend eingestellten Brenners (unvollständige Gasverbrennung, d. h. Luft/Sauerstoffunterschuß) im allgemeinen kostengünstiger.

Die beschriebenen Rinnensysteme können an konventionell beheizte Platinoder Steinrinnen angeflanscht werden. Beim Anschluß an eine Steinrinne ist die Kühlung des Steinrinnen-Skull-Übergangs wichtig. Im Betrieb genügt in der Regel eine gute Kontaktierung der wassergekühlten Rinne mit dem Steinmaterial. Während der Phase des Aufheizens muß die Bewegungsfreiheit der Steinrinne relativ zu HF-Rinne sichergestellt sein, da die Steinrinne sich beim Auftempem ausdehnt, während die wassergekühlte HF-Rinne ihre Geometrie beibehält. Am besten bewährt hat sich das Vorgehen, die Steinrinne erst nach dem Antempem an die HF-Rinne heranzufahren und im heißen Zustand zu fixieren.

Bei der Kontaktierung einer HF-Rinne mit einer elektrisch beheizten Platinrinne muß sichergestellt sein, daß entweder keinerlei elektrischer Kontakt zwischen den metallischen Bauteilen der HF-Rinne oder aber ein sehr guter elektrischer Kontakt besteht. Der letzte Fall birgt die Gefahr, daß die HF-Störsignale über das Platinsystem ausgekoppelt werden, ist aber dem schlechten Kontakt, der mit Funkenbildung an Stellen mit erhöhtem Widerstand einhergeht, vorzuziehen.

Eine vollkommene elektrische Trennung zwischen Skull-Rinne und Platinrinne kann erreicht werden durch keramische Zwischenstücke, die einen Abstand von mindestens 5 mm zwischen den metallischen Bauteilen gewährleisten müssen. Größere Abstände bieten mehr Sicherheit bezüglich der elektrischen Durchlagsfestigkeit, sind aber insbesondere bei aggressiven Schmelzen schwerer zu dichten. Als Isolationsmaterial erwies sich eine Quarzkeramik als am geeignetsten.

Hat die Rinne eine Länge von mehr als 1200 mm, so muß sie mit mehreren Flachspulen beheizt werden, wobei die Flachspulen idealerweise von verschiedenen HF-Generatoren mit Energie versorgt werden, um die Temperatur in den einzelnen Rinnenbereichen unabhängig voneinander einstellen zu können. Der Abstand x der benachbarten Flachspulen sollte größer oder mindestens gleich der Höhe der Spulenwicklung d sein, damit die HF-Felder sich nicht gegenseitig beeinflussen.

Im Übergangsbereich zwischen zwei Flachspulen liegt ein nicht beheizter oder nur sehr schwach beheizter Bereich, da die beiden Flachspulen nicht beliebig nahe aneinander geführt werden können. In dieser Zone kühlt die Schmelze ab. Ein Auf- und Abheizen einer Glasschmelze ist für die Glasqualität insbesondere auch aufgrund der Gefahr des thermischen Reboil unerwünscht. Um ein glattes Temperaturprofil oder ein monoton steigendes oder monoton fallendes Temperaturprofil über die gesamte Rinnenlänge sicherzustellen, muß eine Zusatzheizung im Bereich zwischen zwei Spulenübergängen installiert werden. Es kann bei dem hier beschriebenen Rinnentyp entweder eine Elektrozusatzheizung (z.B. sic-Stäbe oder Kanthalnadeln) oder eine Gasbefeuerung eingesetzt werden. Im Falle der Gasbefeuerung erweist sich die Verwendung der Flachspule mit Spulenführung nur unterhalb der Rinne als vorteilhaft.

Bisher war von immer von jener erfindungsgemäßen Rinne die Rede, bei welcher die Metallrohre in Ebenen liegen, die im wesentlichen senkrecht verlaufen, und damit zugleich senkrecht zur Strömungsrichtung. Hierbei verlaufen die Windungen der HF-Spule in Ebenen, die im wesentlichen Horizontal-Ebenen sind.

Es ist aber auch gemäß der Erfindung möglich, die Metallrohre in Ebenen anzuordnen, die gegen Vertikalebenen geneigt sind, oder gar horizontal verlaufen, dabei aber die Windungen der Spule in senkrechten Ebenen anzuordnen, oder in Ebenen, die gegen Vertikalebenen geneigt sind.

Die Erfindung ist anhand der Zeichnung näher erläutert. Darin ist im einzelnen folgendes dargestellt:
- Figur 1: ist eine Draufsicht auf eine Induktionsspule bei einer erfindungsgemäßen Vorrichtung.
- Figur 2: ist eine 3D-Ansicht einer Induktionsspule, die in einer Ebene leicht gewölbt ist.
- Figur 3: ist eine 3D-Ansicht von zwei Spulen, die in einer Ebene leicht gewölbt sind.
- Figur 4: zeigt eine käfigartige Skull-Rinne.
- Figur 5: veranschaulicht schematisch eine Skull-Rinne mit mehreren, in Serie geschalteten Flachspulen.
- Figur 6: zeigt eine Skull-Rinne in einem zur Glasflußrichtung senkrechten Schnitt mit zugehörender Induktionsspule und Brenner.
- Figur 7: zeigt einen ähnlichen Gegenstand wie Figur 6, jedoch mit Elektro-Zusatzheizung.
- Figur 8: zeigt stark schematisiert eine erfindungsgemäße Skull-Rinne gemäß einer zweiten Ausführungsform in einem Vertikalschnitt.

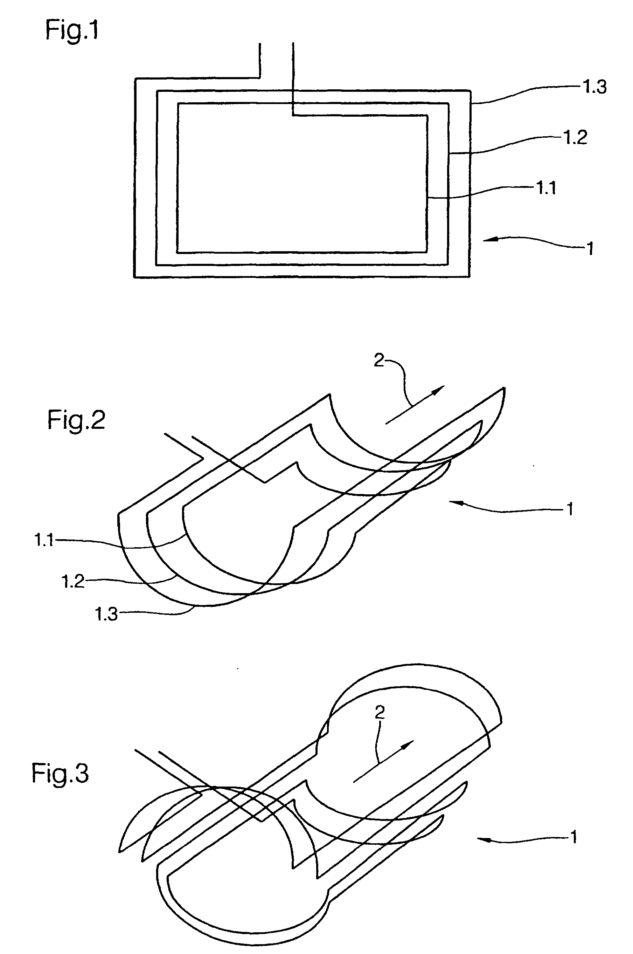

Die in Figur 1 gezeigte Spule 1 weist schneckenförmig verlaufende Windungen 1.1, 1.2, 1.3 auf. Die Windungen liegen im vorliegenden Falle in einer Horizontalebene, genau wie die Glasiflußrichtung 2. Das lichte Maß der inneren Windung in Glasflußrichtung 2 ist relativ groß. Es kann ein mehrfaches der lichten Weite senkrecht zur Glasflußrichtung 2 betragen.

Auch die in Figur 2 gezeigte Spule 1 ist schneckenförmig und umfaßt die Windungen 1.1, 1.2, 1.3. Es versteht sich, daß auch eine viel größere Zahl von Windungen möglich ist. Diese Spule ist in einer Ebene leicht gekrümmt. Die in Richtung des Glasflusses 2 verlaufenden Windungsabschnitte liegen beidseits der hier nicht dargestellten Rinne.

Bei der in Figur 3 dargstellten Spule sind die Windungen unterteilt. Man erkennt wiederum Windungsabschnitte, die parallel zur Glasflußrichtung geradlinig verlaufen. Die gekrümmten Windungsabschnitte liegen am Anfang und am Ende der Rinne. Sie verlaufen bei der einen Hälfte der Windungen unterhalb, und bei der anderen Hälfte der Windungen oberhalb der nicht dargestellten Rinne. Dadurch wird folgendes erreicht: diejenigen, in den Skull-Rohren induzierten Hochfrequenzspannungen, die durch die gekrümmten Spulenabschnitte erzeugt werden, werden durch den gegenläufigen Umlauf der gekrümmten Windungsabschnitte weitgehend aufgehoben.

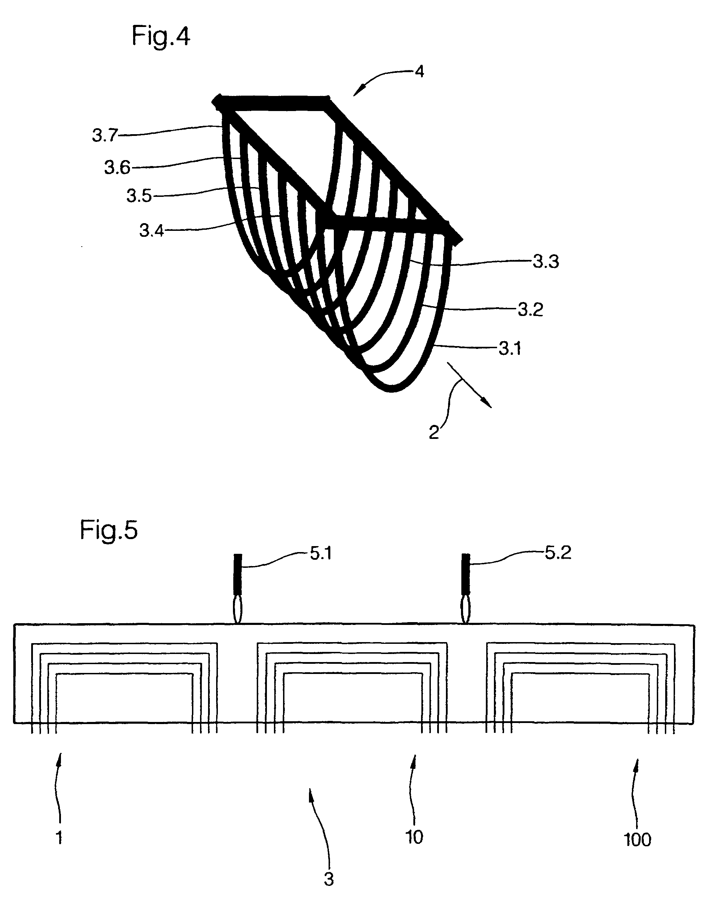

Figur 4 zeigt die Skull-Rinne 3. Sie umfaßt eine Mehrzahl von U-förmigen Skull-Rohren 3.1 - 3.7. Die Skull-Rohre liegen in zueinander parallelen Ebenen. Statt einer reinen U-Form sind auch Abweichungen denkbar, beispielsweise einer angenäherten V-Form. Die Skull-Rohre sind - wie bei Skulltiegeln - wassergekühlte Metallrohre.

An den freien Enden der U-Elemente sind Leiter 4 vorgesehen, die die freien Enden der U-Elemente miteinander kurzschließen. Auch diese Kurzschlußleitungen 4 sind luft- oder wassergekühlt.

Im vorliegenden Falle verlaufen die U-Elemente in Ebenen, die senkrecht zu der Glasflußrichtung 2 liegen. Es wäre aber auch denkbar, die U-Elemente in hierzu geneigten Ebenen anzuordnen.

Figur 4 macht deutlich, daß der von den Kurschlußleitem 4 umschlossene Raum nach oben offen ist. Die Schmelze ist somit von oben her zugänglich, ausgenommen die Kurzschlußzonen am Rinneneingang und am Rinnenausgang. Es gibt somit oberhalb der Schmelze keine wassergekühlten Bauteile und damit auch keine Gefahr der Kondensation von Verdampfungsprodukten mit den eingangs geschilderten Nachteilen. Außerdem lassen sich über der Schmelze Gasbrenner oder sonstige Zusatz-Heizeinrichtungen anordnen. Die Oberhitze ist vorteilhaft für den Fall, daß die Rinne als Läuteraggregat eingesetzt wird. Dies kann notwendig sein, um den Oberflächenbereich der Schmelze auf besonders hohe Temperaturen zu bringen, damit das Aufplatzen von Blasen und das Austreten von Gas aus der Schmelze sichergestellt wird.

Figur 5 zeigt eine verhältnismäßig lange Skull-Rinne 3. Dieser Rinne 3 sind mehrere Flachspulen 1, 10, 100, zugeordnet. Außerdem sind Zusatz-Heizeinrichtungen 5.1, 5.2 vorgesehen. Die Zusatz-Heizeinrichtungen liegen jeweils im Übergangsbereich zwischen zwei Flachspulen.

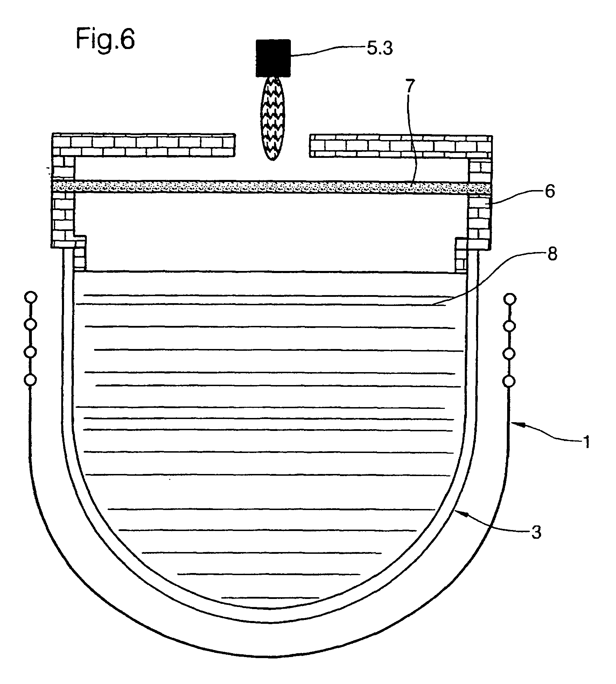

Figur 6 zeigt eine erfindungsgemäße Vorrichtung in einem zur Richtung des Glasflusses senkrechten Schnitt. Die Skull-Rinne 3, so wie in Figur 4 gezeigt, ist von Schmelze 8 durchflossen. Dabei bewegt sich der Schmelzfluß außerordentlich langsam. Die Skull-Rinne ist von einer Induktionsspule 1 umgeben. Diese kann die Konfiguration der in den Figuren 1 - 3 gezeigten Spulen aufweisen.

Der Oberofenraum ist aus einem Aufbau 6 aus Feuerfestmaterial gebildet. Dabei ist eine Brenner-Zusatzheizung 5.3 vorgesehen. Diese kann entweder unmittelbar Wärme auf die Schmelzoberfläche übertragen. Die Übertragung kann jedoch auch indirekt geschehen. Es kann nämlich - so wie hier dargestellt - eine keramische Platte 7 vorgesehen werden, die von der Brenner-Zusatzheizung aufgeheizt wird und sodann Wärme gleichmäßig verteilt der Schmelzoberfläche zuführt.

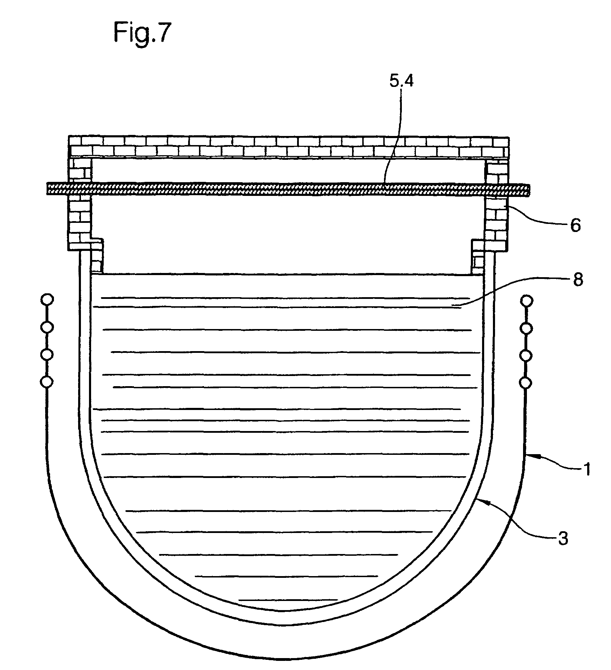

Bei der Ausführungsform gemäß Figur 7 ist statt einer keramischen Platte 7 eine Elektro-Zusatzheizung 5.4 vorgesehen, die die Schmelzoberfläche aufheizt.

Die Spule hat eine möglichst große Mittelöffnung. Die Spule verläuft rechts und links der Rinne parallel zum Glasfluß und am Ende der Rinne unterhalb der Rinne auf die gegenüberliegende Rinnenseite. Idealerweise verlaufen die eine Hälfte der Windungen unterhalb und die andere Hälfte der Windungen oberhalb der Rinne auf die gegenüberliegende Seite. Damit wird erreicht, daß sich die durch diese Spulenstücke in den Skull-U-Rohren induzierten HF-Spannungen durch den gegenläufigen Umlauf weitgehend aufheben. Im Bereich der Spulenrückführung auf die gegenüberliegende Rinnenseite ist die Skullrinne am oberen Ende von der einen zur anderen Rinnenseite kurzgeschlossen. Der Kurzschluß ist luft- oder wassergekühlt.

Die Skull-Rinne umfaßt vorzugsweise eine Reihe von U-Segmenten, die am oberen Ende einen Kreiskurzschluß haben. Die Spule ist in Projektion von oben eine schneckenförmig gewickelte rechteckig verdrückte Flachspule, deren schmale Seiten oberhalb und bzw. oder unterhalb der Rinne herumgeführt werden. Werden Spulenstücke oberhalb der Rinne entlang geführt, so ist zwischen Schmelze und Spule eine keramische Isolation, z.B. in Form einer Quarzgutbrücke anzubringen.

Der Aufbau hat den Vorteil gegenüber liegenden Zylinderrinnen mit Zylinderspulen, daß im oberen Bereich der Schmelze, mit Ausnahme der Kurzschlußzonen am Rinneneingang und Ausgang, keine wassergekühlten Bauteile vorhanden sind, so daß die Schmelze hier heißer ist und keine Gefahr der Kondensation von Verdampfungsprodukten besteht. Zudem ist der Bereich oberhalb der Schmelze frei zugänglich zur Installation einer Gas- oder Elektrooberhitze. Diese Oberhitze ist vorteilhaft für den Fall, daß die Rinne als Läuteraggregat eingesetzt wird, da hiermit höhere Oberflächentemperaturen erreichbar sind und damit das Aufplatzen von Blasen sichergestellt werden kann. Die Oberhitze ist außerdem hilfreich für den Fall des Ausfalls der Hochfrequenzenergie, da in diesem Fall zumindest der Glastransport sichergestellt werden kann und das Wiederankoppeln nach Ausfall der Hochfrequenzheizung erleichtert wird.

Außerdem ist der beschriebene Aufbau vorteilhaft zum Anbringen eines komplexen Oberbaus, bestehend aus keramischen Platten, die die Rinne abdecken, in denen das Glas fließt. Diese keramischen Platten werden durch die Brenner mit der Oberseite erhitzt und strahlen ihrerseits mit ihrer Unterseite auf die Glasoberfläche, so daß das Glas indirekt beheizt wird. Dies hat den Vorteil, daß bei Gläsern mit stark zur Verdampfung neigenden Komponenten, wie beispielsweise B₂O₃, P₂O₅, F, S, Se, Te und weiteren keine starken und turbulenten atmosphärischen Strömungen direkt oberhalb der Glasschmelze auftreten, die die leichtflüchtigen Komponenten mit sich fortreißen und somit zu einer Veränderung der Glaszusammensetzung führen. Auch wird hierdurch ein vorzeitiges Verstopfen von Filteranlagen vermieden.

Ein weiterer Vorteil des gewählten Aufbaus ist, daß bei einer Zusatzbeheizung mittels Brenner, ob mit oder ohne keramischer Abdeckplatten, eine reduzierende Atmosphäre eingestellt werden kann. Diese ist zur Herstellung von Wärmeschutzgläsem oder hoch- UV-durchlässigen Gläsern nötig, bei denen es darauf ankommt, daß das Fe³⁺/Fe²⁺-Verhältnis möglichst weitgehend zur reduzierten Form verschoben ist. Fe²⁺ absorbiert im IR, also die Wärmestrahlung (Wärmeschutzglas), während Fe³⁺ im UV absorbiert, also bei hoch UV-durchlässigen Gläsern weitestgehend vermieden werden muß. Da es sich bei den Gläsern oft um Phosphat- bzw. Flurphosphatgläser handelt, ist die Verwendung einer keramischen Abdeckplatte sinnvoll. Eine ähnliche Argumentation gilt bei der Produktion von Anlaufgläsern, bei denen es darauf ankommt, daß die für die Färbung notwendigen Chalkogenide zumindest teilweise in der reduzierten Form (S²⁻, Se²⁻, Te²⁻) vorliegen. Auch hier ist es vorteilhaft, die Verdampfung, in diesem Fall der Farbkomponenten, durch Verwendung keramischer Abdeckplatten zu minimieren.

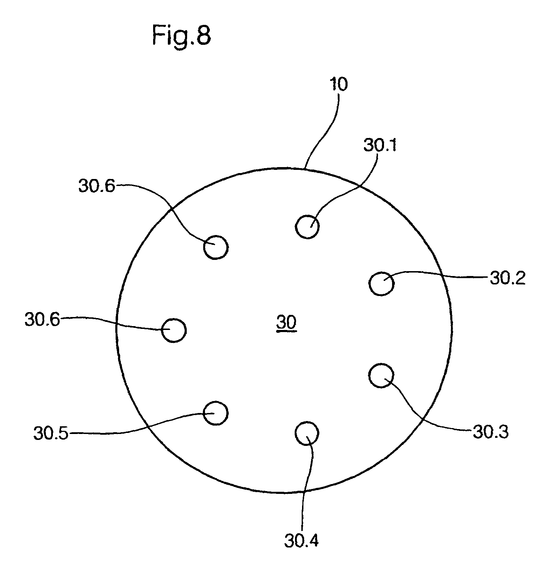

Bei der Ausführungsform gemäß Figur 8 ist die Skull-Rinne 30 aus einer Vielzahl von Rohren gebildet, die horizontal verlaufen - siehe die Rohre 30.1 bis 30.6. Die Rohre sind hierbei wiederum kreisförmig angeordnet, so daß sie einen Kranz bilden.

Die Rohre 30.1 bis 30.6 sind umgeben von einer Mehrzahl von Windungen einer Spule 10. Die Windungen sind dabei um eine virtuelle Achse angeordnet, die horizontal verläuft.

Es wäre auch möglich, die Skull-Rohre 30.1 bis 30.6 gegen die Horizontale mehr oder minder geneigt anzuordnen. Desgleichen wäre es möglich, die virtuelle Wickelachse der Spule 10 gegen die Horizontale zu neigen.

Es wäre ferner denkbar, die Windungen der Spule 10 in einem oberen Bereich, das heißt oberhalb der hier nicht dargestellten Glasschmelze - derart anzuordnen, daß ein Freiraum zum Einfügen einer ebenfalls hier nicht dargestellten Infrarot-Heizvorrichtung geschaffen würde.

Das Kurzschließen der Metallrohre 30.1 bis 30.6 bei der Ausführungsform gemäß Figur 8 kann besonders vorteilhaft sein. Die Erfinder haben nämlich folgendes erkannt:
Der Kurzschluß führt - je nach seiner Lage - zu einem Verdrängen des HF-Feldes nach der einen oder anderen Richtung. Befindet sich der Kurzschluß am Ende der Rinne 30, so findet eine Verdrängung des HF-Feldes in stromaufwärtiger Richtung statt, das heißt zum Rinneneintritt hin. Dies bedeutet, daß dort eine besonders starke Aufheizung der Schmelze stattfindet. Befindet sich der Kurzschluß hingegen am Anfang der Rinne, so wird das HF-Feld in stromabwärtiger Richtung verdrängt. Dies führt zu einem besonders starken Aufheizen der Schmelze im Auslaufbereich der Rinne. Das eine oder das andere kann vorteilhaft sein.

Vorteilhafterweise wird die erfindungsgemäße Vorrichtung zum Läutern von optischen Gläsern eingesetzt.

## Patentansprüche

1. Vorrichtung für das Erschmelzen oder das Läutern von Gläsern oder Glaskeramiken;
1.1 mit einer Rinne (3, 30), die im wesentlichen horizontal angeordnet ist und die einen Eingang und einen Ausgang für die Glasschmelze aufweist;
1.2 die Rinne (3, 30) ist nach Art eines Skull-Tiegels aus einer Vielzahl von Metallrohren (3.1 - 3.7; 30.1 - 30.6) aufgebaut, die an ein Kühlmedium anschließbar sind;
1.3 der Rinne (3, 30) ist eine HF-Spule (1, 10, 100) zum Einkoppeln von HF-Energie in die Schmelze zugeordnet.

2. Vorrichtung nach Anspruch 1, **dadurch gekennzeichnet, daß** die Metallrohre (3.1 - 3.7; 30.1 - 30.6) und die Windungen der HF-Spule (1, 10, 100) wenigstens im Einkoppelbereich jeweils unter einem Winkel zueinander verlaufen.

3. Vorrichtung nach Anspruch 1 oder 2, **dadurch gekennzeichnet, daß** die Metallrohre (3.1 - 3.7; 30.1 - 30.6) wenigstens auf einem Teil der Länge der Rinne (3, 30) im wesentlichen in Strömungsrichtung der Glasschmelze verlaufen.

4. Vorrichtung nach Anspruch 3, **dadurch gekennzeichnet, daß** die Metallrohre (3.1 - 3.7; 30.1 - 30.6) miteinander kurzgeschlossen sind.

5. Vorrichtung nach Anspruch 1 oder 2, **dadurch gekennzeichnet, daß** die Skull-Rohre (3.1 - 3.7) U-förmig gestaltet und nebeneinander angeordnet sind, so daß sie eine nach oben offene käfigartige Skull-Rinne (3) bilden.

6. Vorrichtung nach Anspruch 5, **dadurch gekennzeichnet, daß** die Enden der U-Schenkel zwecks Bildung einer Kurzschlußbrücke leitend miteinander verbunden sind.

## Claims

1. Apparatus for the melting or refining of glasses or glass-ceramics;
1.1 having a trough (3, 30) which is arranged substantially horizontally and has an inlet and an outlet for the glass melt;
1.2 the trough (3, 30) is constructed in the style of a skull crucible from a multiplicity of metal tubes (3.1 - 3.7; 30.1 - 30.6), which can be connected to a cooling medium;
1.3 the trough (3, 30) is assigned a HF coil (1, 10, 100) for introducing HF energy into the melt.

2. Apparatus according to Claim 1, **characterized in that** the metal tubes (3.1 - 3.7; 30.1 - 30.6) and the turns of the HF coil (1, 10, 100), at least in the region where energy is introduced, in each case run at an angle with respect to one another.

3. Apparatus according to Claim 1 or 2, **characterized in that** the metal tubes (3.1 - 3.7; 30.1 - 30.6), at least over part of the length of the trough (3, 30), run substantially in the direction of flow of the glass melt.

4. Apparatus according to Claim 3, **characterized in that** the metal tubes (3.1 - 3.7; 30.1 - 30.6) are short-circuited with one another.

5. Apparatus according to Claim 1 or 2, **characterized in that** the skull tubes (3.1 - 3.7) are configured in a U-shape and are arranged next to one another, so that they form a cage-like skull trough (3) which is open at the top.

6. Apparatus according to Claim 5, **characterized in that** the ends of the U-limbs are conductively connected to one another so as to form a short-circuit bridge.

## Revendications

1. Dispositif pour la mise en fusion ou l'affinage de verres ou de céramiques vitreuses,
1.1 avec une rigole (3, 30) disposée essentiellement à l'horizontale et présentant une entrée et une sortie pour le verre fondu,
1.2 la rigole (3, 30) étant construite à la manière d'un creuset constitué de plusieurs tubes métalliques (3.1 - 3.7; 30.1 - 30.6) qui peuvent être raccordés à un fluide de refroidissement,
1.3 une bobine HF (1, 10, 100) de couplage d'énergie HF dans la matière en fusion étant associée à la rigole (3, 30).

2. Dispositif selon la revendication 1, **caractérisé en ce qu'**au moins dans la zone du couplage, les tubes métalliques (3.1 - 3.7; 30.1 - 30.6) et les enroulements de la bobine HF (1, 10, 100) s'étendent en formant un angle les uns par rapport aux autres.

3. Dispositif selon la revendication 1 ou 2, **caractérisé en ce qu'**au moins sur une partie de la longueur de la rigole (3, 30), les tubes métalliques (3.1 - 3.7; 30.1 - 30.6) s'étendent essentiellement dans la direction d'écoulement la matière en fusion.

4. Dispositif selon la revendication 3, **caractérisé en ce que** les tubes métalliques (3.1 - 3.7; 30.1 - 30.6) sont raccordés les uns aux autres en court-circuit.

5. Dispositif selon la revendication 1 ou 2, **caractérisé en ce que** les tubes (3.1 - 3.7) ont une configuration en U et sont disposée les uns à côtés des autres de manière à former une rigole (3) en forme de cage ouverte vers le haut.

6. Dispositif selon la revendication 5, **caractérisé en ce que** les extrémités des branches des U sont reliées les unes aux autres de manière conductrice pour former un pont en court-circuit.
